# EUROPÄISCHE PATENTSCHRIFT

(11) **EP 1 386 789 B1**
(45) Veröffentlichungstag und Bekanntmachung des Hinweises auf die Patenterteilung: **12.09.2012**
(21) Anmeldenummer: 03015020.5
(22) Anmeldetag: 02.07.2003
(51) Int. Cl.: H02P 9/10, B60R 16/02, H02J 7/14

(54) **Vorrichtung und Verfahren zur Regelung einer Bordnetzspannung für ein Kraftfahrzeug**
Apparatus and method for controlling a vehicle power supply network
Dispositif et méthode de régulation d'un réseau de distribution automobile

(30) Priorität: 26.07.2002 DE 10234089
(43) Veröffentlichungstag der Anmeldung: 04.02.2004
(73) Patentinhaber: ROBERT BOSCH GMBH, 70442 Stuttgart (DE)
(72) Erfinder: Wohlfahrt, Michael, 70839 Gerlingen (DE); Nasswetter, Guenter, 72810 Gomaringen (DE); Suelzle, Helmut, 71691 Freiberg (DE); Neuser-Hoffmann, Miriam, 74321 Bietigheim-Bissingen (DE)

(56) Entgegenhaltungen:
- EP-A- 0 611 215
- EP-A- 0 927 449
- DE-A1- 4 113 732
- DE-A1- 4 306 489

## Beschreibung

Die Erfindung betrifft ein Verfahren sowie eine Vorrichtung zur Regelung einer Bordnetzspannung, insbesondere von Kfz-Bordnetzen, gemäß dem Oberbegriff des Patentanspruchs 1 bzw. 6.

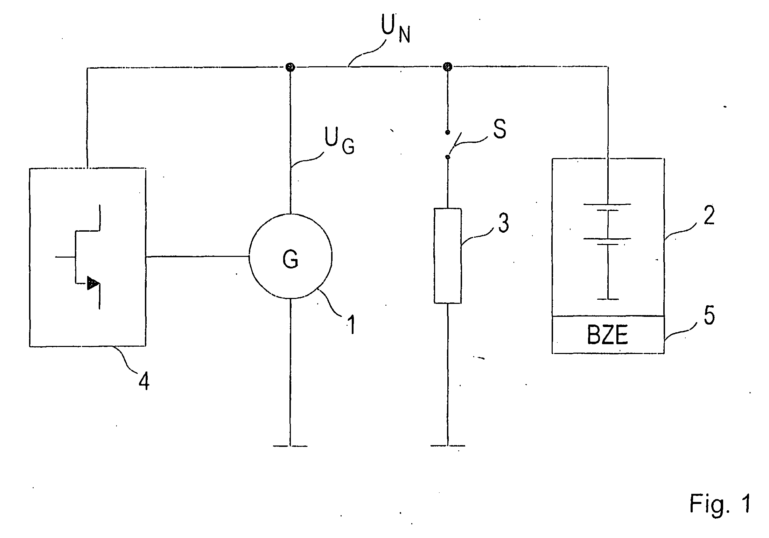

Kraftfahrzeug-Bordnetze werden üblicherweise von einer Batterie sowie von einem Generator mit elektrischer Leistung versorgt. Ein typisches Kfz-Bordnetz ist schematisch in Fig. 1 dargestellt. Das Bordnetz umfaßt einen Generator 1, eine Batterie 2, und mehrere Verbraucher 3, die hier als ein Verbraucher 3 dargestellt sind. Die Verbraucher 3 können über Schalter S ein- und ausgeschaltet werden.

Der Generator 1 umfaßt ferner einen Generatorregler 4 zur Regelung der Bordnetzspannung U_{N}. Kommt es beim Zuschalten eines neuen Verbrauchers, wie z.B. der Sitzheizung oder Klimaanlage zum Absinken der Bordnetzspannung U_{N}, erhöht der Regler 4 die Erregung und damit die vom Generator 1 abgegebene Leistung über ein sogenanntes DF-Signal (Regelsignal, mit dem die Erregung des Generators 1 eingestellt wird). Mit zunehmender Generatorleistung erhöht sich aber auch das auf den Fahrzeugmotor wirkende bremsende Moment. Gerade bei niedrigen Drehzahlen, insbesondere im Lehrlauf, kann dies zu Drehzahleinbrüchen bis hin zum Abwürgen des Motors führen.

Um solchen Drehzahleinbrüchen des Motors entgegenzuwirken, ist es bekannt, die Ausgangsleistung des Generators 1 mit einer sogenannten Load-Response-Funktion zu regeln. Dabei wird der Erregerstrom nur relativ langsam (d.h. mit längerer Zeitkonstante) gemäß einer vorgegebenen Funktion erhöht, um die Bremswirkung des Generators auf den Motor nicht zu stark ansteigen zu lassen. Bis zum Erreichen des normalen Spannungsniveaus im Bordnetz (12, 5V) wird die Versorgung des neu zugeschalteten Verbrauchers 3 zunächst von der Batterie 2 übernommen (Pufferwirkung der Batterie).

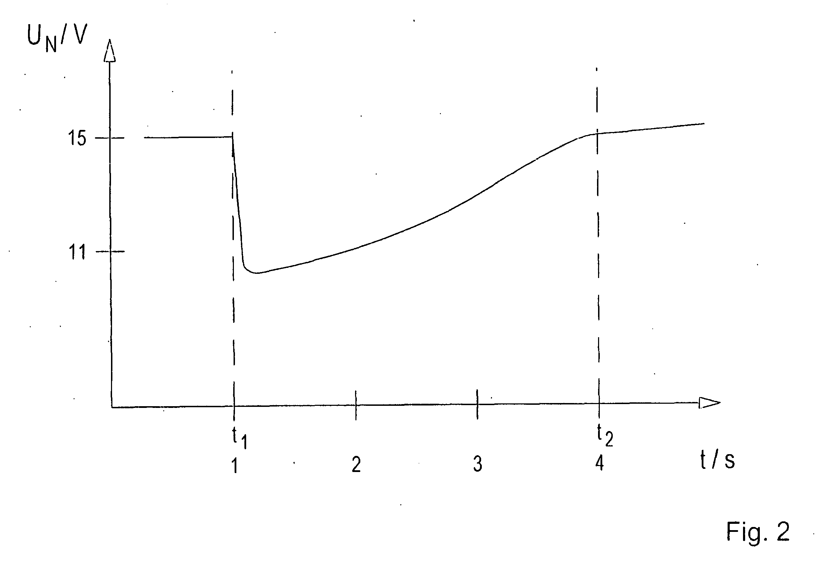

Fig. 2 zeigt den typischen Verlauf einer Bordnetzspannung, die mittels einer Load-Response-Funktion ausgeregelt wird. Wie zu erkennen ist, führt das Einschalten eines neuen Verbrauchers zum Zeitpunkt t1 zu einem Spannungseinbruch in der Bordnetzspannung um etwa 4V. Im folgenden erhöht sich die Bordnetzspannung mit relativ geringer Steigerungsrate, bis sie zum Zeitpunkt t2 das ursprüngliche Spannungsniveau wieder erreicht hat. Dieser Regelvorgang dauert im dargestellten Beispiel etwa 3s.

Bei Betrieb mit schwacher oder defekter Batterie kommt es zu besonders tiefen Spannungseinbrüchen, bei denen die Netzspannung unter eine für Steuergeräte erforderliche Mindestspannung fallen kann. Dauert der Spannungseinbruch zu lange, kann dies zum Ausfall der Steuergeräte und somit zu kritischen Fahrsituationen führen.

Aus der DE 41 13 732 A1 und der DE 43 06 489 A1 sind Ladegeneratoren einschließlich ihrer Steuerung bzw. Regelunge bekannt. Diese Ladegeneratoren entsprechen üblichen Drehstromgeneratoren wie sie in Kraftfahrzeugen zur Erzeugung der elektrischen Energie für das Bordnetz eingesetzt werden.

Speziell bei der DE 4113 732 A1 wird der Ladegenerator so geregelt, dass verhindert wird, dass beim plötzlichen Zuschalten einer großen elektrischen Last vom Fahrzeugmotor ein zu hohes Drehmoment abverlangt wird. Durch Unterdrücken des Anstiegs des Feldstroms des Generators wird das vom Motor bereitzustellende Drehmoment in vorgegebener Weise verringert bzw. angepasst.

Die DE 43 06 489 A1 befasst sich dem gegenüber mit einem speziellen Regelverfahren für Ladegeneratoren, bei dem der Feldstrom unmittelbar auf die Ausgabespannung des Generators reagieren kann. Wodurch Spannungssprünge verhindert werden sollen und die Ausgabespannung präzise geregelt wird.

Es ist daher die Aufgabe der vorliegenden Erfindung, die Spannungsstabilität in elektrischen Bordnetzen nach dem Zuschalten neuer Verbraucher zu verbessern und gleichzeitig die Belastung des Motors durch den Generator gering zu halten.

Gelöst wird diese Aufgabe gemäß der Erfindung durch die im Patentanspruch 1 bzw. 6 angegebenen Merkmale. Weitere Ausgestaltungen der Erfindung sind Gegenstand von Unteransprüchen.

Der wesentliche Gedanke der Erfindung besteht darin, die Bordnetzspannung mit hoher Steigerungsrate zu erhöhen, wenn die Bordnetzspannung nach dem Zuschalten eines Verbrauchers einen vorgegebenen Schwellenwert unterschreitet, und die Bordnetzspannung mit niedriger Steigerungsrate zu erhöhen, wenn die Bordnetzspannung den vorgegebenen Schwellenwert wieder überschritten hat.

Es wird also eine Eingriffsgrenze (Schwellenwert) für die Bordnetzspannung vorgegeben, die eine Grenze zwischen zwei Regelcharakteristiken darstellt. Bei Unterschreiten der Eingriffsgrenze wird die Bordnetzspannung schnell ausgeregelt, liegt dagegen die Bordnetzspannung über der Eingriffsgrenze, so wird sie mit geringerer Anstiegsgeschwindigkeit, vorzugsweise gemäß einer vorgegebenen Load-Response-Funktion, auf einen stationären Endwert geregelt.

Durch das schnelle Ausregeln der Bordnetzspannung unterhalb der Eingriffsgrenze kann die für sicherheitsrelevante Einrichtungen des Bordnetzes erforderliche Mindestspannung in kürzester Zeit wieder erreicht werden. Die schnell ansteigende Leistungsaufnahme des Generators bzw. der gesteigerte Bedarf an Drehmoment des Generators belastet zwar den Motor nicht unerheblich, die Belastung dauert jedoch nur relativ kurze Zeit. Danach, d.h. nach Überschreiten der Eingriffsgrenze, wird die Zunahme des Generatormoments und damit die Belastung des Motors reduziert, wobei die Bordnetzspannung vorzugsweise gemäß einer Load-Response-Funktion nur relativ langsam erhöht wird.

Solange die Bordnetzspannung unterhalb des vorgegebenen Schwellenwertes liegt, wird die Erhöhung der Erregung des Generators vorzugsweise auf einen maximalen Wert gesetzt. Nach Überschreiten des Schwellenwertes wird die Erhöhung der Erregung dagegen auf einen niedrigeren Wert eingestellt.

Der Schwellenwert für die Bordnetzspannung kann grundsätzlich beliebig gewählt werden, ist aber vorzugsweise gleich einer Mindestspannung z.B. für sicherheitsrelevante Einrichtungen oder sonstige Verbraucher. Somit ist gewährleistet, daß die Mindestspannung schnell wieder erreicht wird und sicherheitsrelevante Einrichtungen nicht ausfallen.

Die vorstehend beschriebene Regelung wird vorzugsweise nur dann durchgeführt, wenn der Batteriezustand dies erfordert und die Leistungsfähigkeit oder der Ladezustand der Batterie vorgegebene Grenzwerte unterschreitet. Zur Überprüfung des Batteriezustandes ist vorzugsweise eine Batteriezustandserkennung vorgesehen. Mit Hilfe der Information über den Batteriezustand kann im Betrieb beispielsweise der Schwellenwert in Abhängigkeit vom Batteriezustand geändert werden.

Die Erfindung wird nachstehend anhand der beigefügten Figuren beispielhaft näher erläutert. Es zeigen:
Fig. 1 eine schematische Darstellung eines Kfz-Bordnetzes;
Fig. 2 einen typischen Verlauf der Bordnetzspannung bei einer Spannungsregelung mit Load-Response-Funktion;
Fig. 3 den Spannungsverlauf der Bordnetzspannung unter Einsatz verschiedener Regelcharakteristiken gemäß der Erfindung;
Fig. 4 eine Prinzipdarstellung einer Spannungsregelung gemäß einem Ausführungsbeispiel der Erfindung; und
Fig. 5 ein Flussdiagramm zur Darstellung der wesentlichen Verfahrensschritte während einer Regelung der Bordnetzspannung.

Bezüglich der Erläuterung von Fig. 1 und 2 wird auf die Beschreibungseinleitung verwiesen.

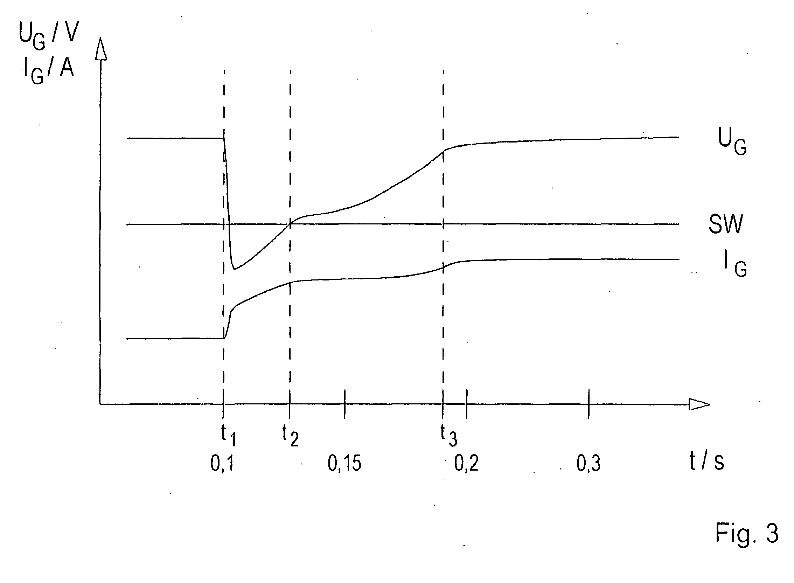

Fig. 3 zeigt den Verlauf der Generator- bzw. Bordnetzspannung U_{N} bei Anwendung unterschiedlicher Regelcharakteristiken unterhalb und oberhalb einer Eingriffsgrenze. Wie zu erkennen ist, führt das Zuschalten eines Verbrauchers zum Zeitpunkt t1 zu einem Spannungseinbruch, bei dem die Bordnetzspannung U_{N} einen vorgegebenen Schwellenwert SW (Eingriffsgrenze) unterschreitet.

Solange die Bordnetzspannung U_{N} niedriger ist als die Eingriffsgrenze SW, wird die Bordnetzspannung U_{N} mit maximaler Steigerungsrate ausgeregelt. Die Erregung des Generators 1 ist in dieser Phase vorzugsweise auf einen maximalen Wert eingestellt (DF-Signal = 100%).

Nach dem Überschreiten des Schwellenwertes SW folgt die Bordnetzspannung U_{N} einer Load-Response-Funktion, bei der der Gradient der Bordnetzspannung U_{N} und damit auch die Belastung des Verbrennungsmotors geringer ist als in der ersten Phase.

Der Generatorstrom I_{G} ist im unteren Graphen von Fig. 3 dargestellt, wobei auch hier zu erkennen ist, daß die Zunahme des Generatorstroms in der ersten Phase der Regelung wesentlich größer ist als in der zweiten Phase. Das Regelverfahren ist selbstverständlich nicht auf zwei Regelphasen beschränkt, sondern kann mehrere Phasen aufweisen, in denen je nach Bedarf eine unterschiedliche Regelcharakteristik angewendet werden kann.

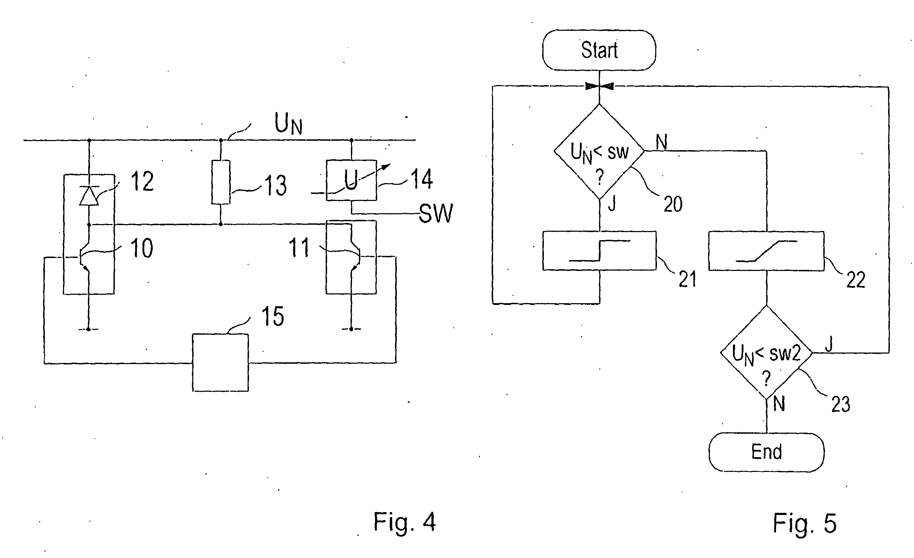

Fig. 4 zeigt ein Ausführungsbeispiel einer Reglerschaltung, mit der die vorstehend beschriebene zweistufige Regelung der Bordnetzspannung durchgeführt werden kann. Die Regelschaltung umfaßt im wesentlichen einen ersten Schalter 10, der gemäß einer Load-Response-Funktion geschaltet wird, um die Bordnetzspannung U_{N} mit langsamer Steigerungsrate zu erhöhen, und einen zweiten Schalter 11, der bei Unterschreiten eines vorgegebenen Schwellenwertes SW durchgeschaltet wird, um eine maximale Erregung des Generators 1 und somit ein schnelles Ansteigen der Bordnetzspannung U_{N} zu erreichen. Die Steueranschlüsse der Transistoren 10, 11 sind mit einer Regeleinheit 15 verbunden, die zur Durchführung des vorstehend beschriebenen Regelverfahrens eingerichtet ist.

Die beiden Schalter 10, 11, die hier beispielhaft als Bipolar-Transistoren dargestellt sind, sind parallel geschaltet und jeweils mit einem ihrer Hauptanschlüsse mit der Erregerwicklung 13 des Generators 1 verbunden. Der Erregerkreis umfaßt ferner eine Freilaufdiode 12.

Die Eingriffsgrenze SW wird in diesem Fall mittels einer Spannungsquelle 14 relativ zur Regelspannung U_{N} eingestellt und entspricht vorzugsweise einer Mindestspannung für sicherheitsrelevante Verbraucher des Bordnetzes.

Wahlweise kann auch nur ein Schalter 10 oder 11 vorgesehen sein, der von der Regeleinheit 15 in Abhängigkeit von der Bordnetzspannung U_{N} mit unterschiedlicher Regelcharakteristik angesteuert wird.

Fig. 5 zeigt die wesentlichen Verfahrensschritte bei der Regelung der Bordnetzspannung in Form eines Flussdiagramms. Nach dem Zuschalten eines neuen Verbrauchers wird zunächst in Schritt 20 überprüft, ob die Bordnetzspannung einen vorgegebenen Schwellenwert SW unterschritten hat. Falls ja, wird die Bordnetzspannung U_{N} in Schritt 21 mit maximaler Steigerungsrate erhöht, bis die Bordnetzspannung den Schwellenwert SW wieder überschreitet.

Liegt die Bordnetzspannung über dem Schwellenwert SW, aber unterhalb einer vorgegebenen Sollspannung SW2, so wird die Bordnetzspannung U_{N} mit niedriger Steigerungsrate erhöht (Schritt 22), bis die Bordnetzspannung U_{N} die vorgegebene Sollspannung SW2 erreicht hat (Schritt 23).

### Bezugszeichenliste

- 1: Generator
- 2: Batterie
- 3: Verbraucher
- 4: Generatorregler
- 5: Batteriezustandserkennung
- 10: erster Schalter
- 11: zweiter Schalter
- 12: Freilaufdiode
- 13: Erregerwicklung
- 14: Spannungsquelle
- 15: Regeleinheit
- 20-23: Verfahrensschritte
- U_{N}: Bordnetzspannung
- t1, t2: Zeitpunkte
- SW: Schwellenwert

## Patentansprüche

1. Verfahren zur Regelung einer Bordnetzspannung in Bordnetzen mit mehreren Verbrauchern (3), die von einem Generator (1) mit elektrischer Energie versorgt werden, **gekennzeichnet durch** folgende Schritte:
- Regeln der Bordnetzspannung (U_{N}) mit hoher Steigerungsrate, solange die Bordnetzspannung (U_{N}) nach dem Zuschalten eines Verbrauchers (3) einen vorgegebenen Schwellenwert (SW) unterschreitet, und
- Regeln der Bordnetzspannung (U_{N}) mit niedriger Steigerungsrate, wenn die Bordnetzspannung (U_{N}) den vorgegebenen Schwellenwert (SW) wieder überschritten hat.

2. Verfahren nach Anspruch 1, **dadurch gekennzeichnet, daß** die Bordnetzspannung (U_{N}) gemäß einer Load-Response-Funktion geregelt wird, wenn die Bordnetzspännung (U_{N}) größer ist als der vorgegebene Schwellenwert (SW).

3. Verfahren nach Anspruch 1 oder 2, **dadurch gekennzeichnet, daß** die Erregung des Generators (1) im wesentlichen auf einen maximalen Wert gesetzt wird, wenn die Bordnetzspannung (U_{N}) niedriger ist als der vorgegebene Schwellenwert (SW), und auf einen niedrigeren Wert eingestellt wird, wenn die Bordnetzspannung (U_{N}) höher ist als der vorgegebene Schwellenwert (SW).

4. Nach einem der vorhergehenden Ansprüche, **dadurch gekennzeichnet, daß** der Schwellenwert (SW) einer Mindestspannung für vorgegebene Einrichtungen entspricht oder höher ist als die Mindestspannung.

5. Verfahren nach einem der vorhergehenden Ansprüche, **dadurch gekennzeichnet, daß** der Batteriezustand mittels einer Batteriezustandserkennung (5) abgefragt wird und das Erhöhen der Bordnetzspannung (U_{N}) mit hoher Steigerungsrate nur dann durchgeführt wird, wenn die Leistungsfähigkeit oder der Ladezustand der Batterie geringer ist als vorgegebene Schwellenwerte.

6. Vorrichtung zur Regelung der Bordnetzspannung (U_{N}) in elektrischen Bordnetzen, insbesondere in Kfz-Bordnetzen, mit mehreren Verbrauchern (3), die von einem Generator (1) mit elektrischer Energie versorgt werden, wobei die Bordnetzspannung (U_{N}) von einem Generatorregler (4) geregelt wird, **dadurch gekennzeichnet, daß** der Generatorregler (4) derart eingerichtet ist, daß die Bordnetzspannung (U_{N}) mit hoher Steigerungsrate erhöht wird, solange die Bordnetzspannung (U_{N}) niedriger ist als ein vorgegebener Schwellenwert (SW), und die Bordnetzspannung (U_{N}) mit niedriger Steigerungsrate erhöht wird, wenn die Bordnetzspannung (U_{N}) höher ist als der vorgegebene Schwellenwert (SW), bis die Bordnetzspannung (U_{N}) eine vorgegebene Sollspannung (SW2) erreicht hat.

7. Vorrichtung nach Anspruch 6, **dadurch gekennzeichnet, daß** der Generatorregler (4) eine erste Schalteinrichtung (10) zur Regelung der Bordnetzspannung gemäß einer Load-Response-Funktion, und eine zweite Schalteinrichtung (11) zur Regelung der Bordnetzspannung (U_{N}) mit hoher Steigerungsrate aufweist, die aktiviert wird, wenn die Bordnetzspannung (U_{N}) den vorgegebenen Schwellenwert (SW) unterschreitet.

8. Vorrichtung nach Anspruch 6 oder 7, **dadurch gekennzeichnet, daß** die zweite Schalteinrichtung (11) parallel zur ersten Schalteinrichtung (10) angeordnet ist.

## Claims

1. Method for controlling a vehicle on-board power supply system voltage in vehicle on-board power supply systems having a plurality of loads (3) which are supplied with electrical energy by a generator (1), **characterized by** the following steps:
- control of the vehicle on-board power supply system voltage (U_{N}) with a high rate of increase as long as the vehicle on-board power supply system voltage (U_{N}) drops below a predefined threshold value (SW) after a load (3) is switched on, and
- control of the vehicle on-board power supply system voltage (U_{N}) with a low rate of increase if the vehicle on-board power supply system voltage (U_{N}) has exceeded the predefined threshold value (SW) again.

2. Method according to Claim 1, **characterized in that** the vehicle on-board power supply system voltage (U_{N}) is controlled according to a load response function if the vehicle on-board power supply system voltage (U_{N}) is higher than the predefined threshold value (SW).

3. Method according to Claim 1 or 2, **characterized in that** the excitation of the generator (1) is set essentially to a maximum value if the vehicle on-board power supply system voltage (U_{N}) is lower than the predefined threshold value (SW), and is set to a relatively low value if the vehicle on-board power supply system voltage (U_{N}) is higher that the predefined threshold value (SW).

4. Method according to one of the preceding claims, **characterized in that** the threshold value (SW) corresponds to a minimum voltage for predefined devices or is higher than the minimum voltage.

5. Method according to one of the preceding claims, **characterized in that** the battery status is interrogated by means of a battery status detection system (5), and the vehicle on-board power supply system voltage (U_{N}) is increased with a high rate of increase only if the capacity or the charge state of the battery is lower than predefined threshold values.

6. Device for controlling the vehicle on-board power supply system voltage (U_{N}) in electrical vehicle on-board power supply systems, in particular in motor vehicle on-board power supply systems, having a plurality of loads (3) which are supplied with electrical energy by a generator (1), wherein the vehicle on-board power supply system voltage (U_{N}) is controlled by a generator controller (4), **characterized in that** the generator controller (4) is configured in such a way that the vehicle on-board power supply system voltage (U_{N}) is increased with a high rate of increase as long as the vehicle on-board power supply system voltage (U_{N}) is lower than a predefined threshold value (SW), and the vehicle on-board power supply system voltage (U_{N}) is increased with a low rate of increase if the vehicle on-board power supply system voltage (U_{N}) is higher than the predefined threshold value (SW), until the vehicle on-board power supply system voltage (U_{N}) has reached a predefined setpoint voltage (SW2).

7. Device according to Claim 6, **characterized in that** the generator controller (4) has a first switching device (10) for controlling the vehicle on-board power supply system voltage according to a load response function, and a second switching device (11) for controlling the vehicle on-board power supply system voltage (U_{N}) with a high rate of increase, which is activated if the vehicle on-board power supply system voltage (U_{N}) drops below the predefined threshold value (SW).

8. Device according to Claim 6 or 7, **characterized in that** the second switching device (11) is arranged parallel to the first switching device (10).

## Revendications

1. Procédé de régulation de la tension de réseaux de bord comprenant plusieurs consommateurs (3) alimentés en énergie électrique par un générateur (1), le procédé étant **caractérisé par** les étapes suivantes :
- régulation de la tension (U_{N}) du réseau de bord à un taux de montée haut tant que la tension (U_{N}) du réseau de bord n'atteint pas une valeur de seuil (SW) prédéterminée après le branchement d'un consommateur (3) et
- régulation de la tension (U_{N}) du réseau de bord à un taux de montée bas lorsque la tension (U_{N}) du réseau de bord a de nouveau dépassé la valeur de seuil (SW) prédéterminée.

2. Procédé selon la revendication 1, **caractérisé en ce que** lorsque la tension (U_{N}) du réseau de bord est supérieure à la valeur de seuil (SW) prédéterminée, la tension (U_{N}) du réseau de bord est régulée suivant une fonction de réponse à la charge.

3. Procédé selon les revendications 1 ou 2, **caractérisé en ce que** lorsque la tension (U_{N}) du réseau de bord est plus basse que la valeur de seuil (SW) prédéterminée, l'excitation du générateur (1) est fixée essentiellement à une valeur maximale et est réglée à une valeur plus basse lorsque la tension (U_{N}) du réseau de bord est supérieure à la valeur de seuil (SW) prédéterminée.

4. Procédé selon l'une des revendications précédentes, **caractérisé en ce que** la valeur de seuil (SW) correspond à une tension minimale de dispositifs prédéterminés ou est supérieure à la tension minimale.

5. Procédé selon l'une des revendications précédentes, **caractérisé en ce que** l'état de la batterie est vérifié au moyen d'une détection (5) de l'état de la batterie et **en ce que** le rehaussement de la tension (U_{N}) du réseau de bord a un taux de montée haut mais n'est réalisé que si la capacité ou l'état de la charge de la batterie sont plus basses que des valeurs de seuil prédéterminée.

6. Dispositif de régulation de la tension (U_{N}) de réseau de bord électrique, en particulier de réseaux de bord de véhicules automobiles, qui présente plusieurs consommateurs (3) alimentés en énergie électrique par un générateur (1), la tension (U_{N}) du réseau de bord étant régulée par un régulateur (4) du générateur, **caractérisé en ce que**
le régulateur (4) du générateur est conçu pour rehausser la tension (U_{N}) du réseau de bord à un taux de montée haut tant que la tension (U_{N}) du réseau de bord est plus basse qu'une valeur de seuil (SW) prédéterminée et pour rehausser la tension (U_{N}) du réseau de bord à un taux de montée bas lorsque la tension (U_{N}) du réseau de bord est supérieure à la valeur de seuil (SW) prédéterminée jusqu'à ce que la tension (U_{N}) du réseau de bord ait atteint une tension de consigne (SW2) prédéterminée.

7. Dispositif selon la revendication 6, **caractérisé en ce que** le régulateur (4) du générateur présente un premier circuit (10) qui régule la tension du réseau de bord selon une fonction de réponse à la charge et un deuxième circuit (11) qui régule la tension (UN) du réseau de bord à un taux de montée haut et qui est activé lorsque la tension (U_{N}) du réseau de bord n'atteint pas la valeur de seuil (SW) prédéterminée.

8. Dispositif selon les revendications 6 ou 7, **caractérisé en ce que** le deuxième circuit (11) est disposé en parallèle au premier circuit (10).
